# EUROPÄISCHE PATENTSCHRIFT

(11) **EP 0 778 628 B1**
(45) Veröffentlichungstag und Bekanntmachung des Hinweises auf die Patenterteilung: **02.12.1998**
(21) Anmeldenummer: 96202346.1
(22) Anmeldetag: 23.08.1996
(51) Int. Cl.: H01M 4/02, H01M 4/04, H01M 4/66, H01M 4/70, H01M 2/26, H01M 10/40, H01M 4/12

(54) **Elektrochemische Zelle mit einer Alkalimetall- oder Erdalkalimetallanode**
Electrochemical cell having an alkaline metal or alkaline-earth metal anode
Cellule électrochimique comprenant une anode en métal alcalin ou alcalino-terreux

(30) Priorität: 04.12.1995 DE 19545110
(43) Veröffentlichungstag der Anmeldung: 11.06.1997
(73) Patentinhaber: FRIWO SILBERKRAFT GESELLSCHAFT FÜR BATTERIETECHNIK MBH, D-47058 Duisburg (DE)
(72) Erfinder: Cornelissen, Johannes, 46459 Rees (DE); Ebert, Helmut, 45307 Essen (DE); Michels, Ludger, Dr., 47279 Duisburg (DE)
(74) Vertreter: Ackmann, Günther, Dr.-Ing.

(56) Entgegenhaltungen:
- US-A- 4 283 470
- US-A- 4 916 036
- US-A- 5 368 958
- PATENT ABSTRACTS OF JAPAN vol. 015, no. 273 (E-1088), 11.Juli 1991 & JP 03 093156 A (SONY CORP), 18.April 1991,
- PATENT ABSTRACTS OF JAPAN vol. 95, no. 008, 29.September 1995 & JP 07 134987 A (RICOH CO LTD), 23.Mai 1995,

## Beschreibung

Die Erfindung betrifft eine elektrochemische Zelle mit einer Alkalimetall- oder Erdalkalimetallanode und einem nichtwäßrigen Elektrolyten, wobei die Anode aus zwei Alkalimetall- oder Erdalkalimetallfolien besteht, zwischen denen zur Stromableitung eine Leiterfolie angeordnet ist.

Bei elektrochemischen Zellen der gattungsgemäßen Art ist es bekannt, die Schicht aus Alkalimetall oder Erdalkalimetall durch eine Metallplatte, ein Drahtgitter oder ein Streckmetall aus Kupfer o. dgl. zu verstärken, wobei die einseitig mit der Schicht verbundene metallische Verstärkung als Stromkollektor dient und mit dem Elektrolyten in Verbindung kommt. Um schädigende Effekte bei einer Zellumkehr zu verhindern, ist in der DE 33 01 297 C2 vorgeschlagen worden, daß zur Bildung der Anode eine zumindest weitgehend perforationsfreie Kupferfolie zwischen zwei Alkalimetall- oder Erdalkalimetallfolien angeordnet und vom Alkalimetall oder Erdalkalimetall im wesentlichen völlig umschlossen ist. Hierdurch soll die Kupferschicht anfänglich von der Reaktion abgeschirmt sein, nach dem Verbrauch des Anodenmetalls für eine gute Wärmeableitung Sorge tragen und lokale Überhitzungen ausschließen. Eine ähnliche Ausführung beschreibt die US-5 368 958 A, bei der die Lithiumfolien etwa 2 mm größer als die Kupferfolie sind und die Kupferfolie zwischen den Lithiumfolien durch eine Lithium/Lithium-Verbindung der überstehenden Lithiumränder lokalisiert wird. Die Herstellung solcher Anoden mit einer allseitig vom Anodenmetall umschlossenen Kupferfolie ist jedoch sehr aufwendig. Auch ist mit einem ungleichmäßigen Verbrauch des Anodenmetalls zwischen dem Randbereich und dem von der Kupferfolie erfaßten Flächenbereich zu rechnen. Weiterhin ist aus DE 32 30 410 C2 ein mit Aluminium beschichtetes Stütz- und Ableitergerüst aus Titan bekannt, auf das Al-Pulver oder LiAl-Pulver bei Temperaturen im Bereich der Schmelztemperatur aufgesintert wird. Zur besseren Haftung der Aktivmasse soll die Titanfolie mit dünnen Stahlstiften durchstoßen und eine "reibeisenartige" Struktur erhalten oder aus Streckmetall bestehen. Eine solche Pulversintermethode ist besonders aufwendig.

Demgegenüber liegt der Erfindung die Aufgabe zugrunde, den Aufbau der Zelle insbesondere die Befestigung der Alkalimetall- oder Erdalkalimetallfolien auf der Leiterfolie zu vereinfachen und eine bessere Ausnutzung der Aktivmasse zu ermöglichen. Zur Lösung sieht die Erfindung eine perforierte Leiterfolie mit einem Perforationsgrad von wenigstens 30 % vor, deren Grundfläche deckungsgleich mit den beiden Alkalimetall- oder Erdalkalimetallfolien liegt, wobei die beiden Alkalimetall- oder Erdalkalimetallfolien an den Perforationen durch Pressen oder Walzen miteinander verschweißt sind.

Die Anode ist in einfacher Weise aus zwei Anodenmetallfolien und einer perforierten Leiterfolie lamellenförmig aufgebaut, wobei die beiden Anodenmetallschichten mittels Pressen, Walzen an den Perforationen miteinander verbunden (verschweißt) werden. Zwischen den beiden aus dem aktiven Anodenmetall bestehenden Schichten sind somit über die gesamte Anodenfläche verteilte Brücken aus Aktivmasse vorhanden. Dies trägt zu einer besseren Ausnutzung der Aktivmasse unter Beibehaltung des Reversebetriebes bei.

In überraschender Weise leitet auch die erfindungsgemäß vorgesehene stark perforierte und zwischen zwei Anodenmetallfolien angeordnete Leiterfolie die Wärme so gut ab, daß lokale Überhitzungen nicht bemerkbar sind. Auch ist die Einwirkung des Elektrolyten auf die schmalen Ränder der Leiterfolie praktisch ohne Bedeutung.

Der Perforationsgrad der Leiterfolie kann in Abhängigkeit von den Zellentypen und Abmessungen zwischen 30 % und 80 % variiert werden und wird überwiegend zwischen 40 % und 60 % liegen. Weiterhin kann die Leiterfolie als Stromkollektor dienen und zur Verbindung mit dem Anodenpol mit einem Ableiterstreifen versehenen sein. Die Perforation in der Leiterfolie kann durch Ausstanzen geschehen, wobei die Lochform und -größe den jeweiligen Verhältnissen angepaßt werden kann. Brauchbar ist aber auch Streckmetall oder gewalztes Streckmetall mit einem entsprechenden Perforationsgrad.

Die erfindungsgemäße Anodenausbildung ist besonders für elektrochemische Zellen mit Lithiumanoden geeignet, wobei eine platten- oder wickelförmige Anordnung von Anode, Kathode und Separator vorgesehen sein kann.

Die perforierte Leiterfolie kann aus verschiedenen stromleitenden Werkstoffen, beispielsweise aus Kupfer, Nickel, Eisen oder Titan oder aus Legierungen dieser Metalle bestehen. Doch können auch andere für elektrochemische Zellen geeignete leitfähige Trägersubstanzen in Betracht kommen, z. B. aus Kohlenstoff oder leitfähigen Kunststoffen. Verwendbar sind weiterhin Trägersubstanzen, die mit einer leitfähigen Masse, z. B. einem Metall, beschichtet sind.

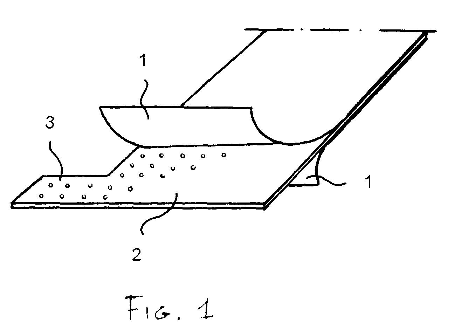

In der Zeichnung Fig. 1 ist der Abschnitt einer für eine Wickelelektrode bestimmte Lithiumanode dargestellt, die aus zwei Alkalimetall- oder Erdalkalimetallfolien 1, z. B. aus Lithium, und einer dazwischen angeordneten, beispielsweise aus Kupfer gefertigten, perforierten Leiterfolie 2 besteht. Die drei Folien liegen deckungsgleich übereinander, bilden also gemeinsam die Ränder der Verbundfolie. Die Leiterfolie 2 ist mit einem Ableitstreifen 3 versehen.

## Patentansprüche

1. Elektrochemische Zelle mit einer Alkalimetall- oder Erdalkalimetallanode und einem nichtwäßrigen Elektrolyten, wobei die Anode aus zwei Alkalimetall- oder Erdalkalimetallfolien besteht, zwischen denen zur Stromableitung eine Leiterfolie angeordnet ist, dadurch gekennzeichnet, daß eine perforierte Leiterfolie (2) mit einem Perforationsgrad von wenigstens 30 % vorgesehen ist, deren Grundfläche deckungsgleich mit den beiden Alkalimetall- oder Erdalkalimetallfolien (1) liegt und daß die beiden Alkalimetall- oder Erdalkalimetallfolien (1) an den Perforationen durch Pressen oder Walzen miteinander verschweißt sind.

2. Elektrochemische Zelle nach Anspruch 1, dadurch gekennzeichnet, daß die Leiterfolie (2) mit einem Ableitstreifen (3) versehen ist.

3. Elektrochemische Zelle nach Anspruch 1 oder 2, dadurch gekennzeichnet, daß die Leiterfolie (2) durch Stanzlöcher perforiert ist.

4. Elektrochemische Zelle nach Anspruch 1 oder 2, dadurch gekennzeichnet, daß die Leiterfolie (2) aus einem gewalzten Streckmetall besteht.

5. Elektrochemische Zelle nach einem der Ansprüche 1 bis 4, dadurch gekennzeichnet, daß die Leiterfolie (2) einen Perforationsgrad bis zu 80 % hat.

6. Elektrochemische Zelle nach einem der Ansprüche 1 bis 5, dadurch gekennzeichnet, daß die Leiterfolie (2) aus Kupfer, Nickel, Eisen oder Titan oder aus Legierungen dieser Metalle besteht.

7. Elektrochemische Zelle nach einem der Ansprüche 1 bis 5, dadurch gekennzeichnet, daß die Leiterfolie (2) aus einer mit einer leitfähigen Masse beschichteten Trägersubstanz besteht.

## Claims

1. An electrochemical cell comprising an alkali-metal or alkaline-earth metal anode and a non-aqueous electrolyte, the anode consisting of two alkali-metal or alkaline-earth metal films, between which a conductor film is disposed for the current tap-off, characterised in that a perforate conductor film (2) having a degree of perforation of at least 30% is provided, the base surface thereof being in register with the two alkali-metal or alkaline-earth metal films (1), and in that the two alkali-metal or alkaline-earth metal films (1) are welded together at the perforations by pressing or rolling.

2. An electrochemical cell according to claim 1, characterised in that the conductor film (2) is provided with a tap-off strip (3).

3. An electrochemical cell according to claim 1 or 2, characterised in that the conductor film (2) is perforated by punched holes.

4. An electrochemical cell according to claim 1 or 2, characterised in that the conductor film (2) consists of a rolled expanded metal.

5. An electrochemical cell according to any one of claims 1 to 4, characterised in that the conductor film (2) has a degree of perforation of up to 80%.

6. An electrochemical cell according to any one of claims 1 to 5, characterised in that the conductor film (2) consists of copper, nickel or titanium, or of alloys of these metals.

7. An electrochemical cell according to any one of claims 1 to 5, characterised in that the conductor film (2) consists of a carrier substance coated with a conductive compound.

## Revendications

1. Pile électrochimique, comportant une anode en un métal alcalin ou en un métal alcalino-terreux et un électrolyte non-aqueux, dans laquelle l'anode est constituée de deux feuilles d'un métal alcalin ou d'un métal alcalino-terreux, entre lesquelles une feuille conductrice est disposée pour la dérivation du courant, caractérisée en ce qu'il est prévu une feuille conductrice perforée (2), ayant un taux de perforation d'au moins 30 % et dont la surface de base recouvre à coincidence les deux feuilles d'un métal alcalin ou d'un métal alcalino-terreux (1), et que les deux feuilles d'un métal alcalin ou d'un métal alcalino-terreux (1) sont soudées l'une à l'autre au niveau des perforations, par pressage ou laminage.

2. Pile électrochimique selon la revendication 1, caractérisée en ce que la feuille conductrice (2) est pourvue d'une bande de dérivation (3).

3. Pile électrochimique selon la revendication 1 ou 2, caractérisée en ce que la feuille conductrice (2) est perforée de trous poinçonnés.

4. Pile électrochimique selon la revendication 1 ou 2, caractérisée en ce que la feuille conductrice (2) est constituée d'un métal déployé laminé.

5. Pile électrochimique selon l'une des revendications 1 à 4, caractérisé en ce que la feuille conductrice (2) a un taux de perforation allant jusqu'à 80 %.

6. Pile électrochimique selon l'une des revendications 1 à 5, caractérisée en ce que la feuille conductrice (2) est constituée de cuivre, de nickel, de fer ou de titane, ou d'alliages de ces métaux.

7. Pile électrochimique selon l'une des revendications 1 à 5, caractérisée en ce que la feuille conductrice (2) est constituée d'une substance support revêtue d'une masse conductrice.
